# EUROPEAN PATENT APPLICATION

(11) **EP 2 138 795 A1**
(43) Date of publication of application: **30.12.2009**
(21) Application number: 08739838.4
(22) Date of filing: 28.03.2008
(51) Int. Cl.: F28D 20/02, F28D 7/16

(54) **HEAT EXCHANGER, AND METHOD FOR MANUFACTURING THE HEAT EXCHANGER**

(30) Priority: 04.04.2007 JP 2007098358
(71) Applicant: Toyota Jidosha Kabushiki Kaisha, Toyota-shi Aichi 471-8571 (JP)
(72) Inventor: TSUBONE, Kenji, Toyota-shi Aichi 471-8571 (JP)
(74) Representative: Intes, Didier Gérard André
(86) International application number: PCT/JP2008/056731
(87) International publication number: WO 2008/123599

(57) **Abstract**

To provide a heat exchange device having tubes both ends thereof are fitted into a connecting pipe thereby exchanging heat at a surface of the tube, and a method of manufacturing the same.

In a heat exchange device 1, both ends of a plurality of tubes 2 for letting through a second heat medium 4 are fitted tightly into connecting tubes 5 while being contacted with a first heat medium 3 thereby exchanging heat between the first and the second heat media 3 and 4, and an inner diameter of the connecting pipe 5 is larger at the side in which the tubes 2 are fitted.

## Description

### TECHNICAL FIELD

This invention relates to a heat exchange device for exchanging heat between a high temperature medium and a low temperature medium. More specifically, the present invention relates to a heat exchange device exchanging the heat through a partition wall by flowing the high temperature medium or the low temperature medium into a plurality of narrow tubes.

### BACKGROUND ART

In order to improve heat transfer efficiency between heat media, a conventional heat exchanger, heat accumulator, cold accumulator or the like is provided with a plurality of tubes penetrating through heat storage material. For example, Japanese Patent Laid-Open No. 2005-233597 discloses a heat storage heat exchanger having a plurality of tubes for letting through a heat medium. According to the heat storage heat exchanger taught by Japanese Patent Laid-Open No. 2005-233597, both ends of the tubes are gathered and connected with connecting pipes. Therefore, heat is exchanged between the heat medium flowing through the tubes and a heat storage material.

As described, according to the heat storage heat exchanger taught by Japanese Patent Laid-Open No. 2005-233597, the plurality of tubes are gathered at both end thereof. However, the end portions of the gathered tubes have to be aligned more accurately.

### DISCLOSURE OF THE INVENTION

The present invention has been conceived noting the technical problem thus far described, and its object is to provide a heat exchange device in which a plurality of tubes for flowing a heat medium therethrough are gathered at both ends, and a method for manufacturing the same.

In order to achieve the above-mentioned object, according to the present invention, there is provided a heat exchange device, comprising: a first heat medium and a second heat medium exchanging heat mutually; and a plurality of narrow tubes for letting through one of the heat media; **characterized in that**: end portions of the plurality of narrow tubes is gathered to seal a clearance among the tubes liquid-tightly or air-tightly; and the gathered ends of the narrow tubes are fitted into a connecting pipe whose diameter is larger than that of the gathered tubes liquid-tightly or air-tightly.

The heat exchange device further comprises: a hollow header; and a plurality of holes formed on one of the surfaces of the header. The connecting pipe is fitted into the hole liquid-tightly or air-tightly.

According to another aspect of the present invention, there is provided a method for manufacturing a heat exchange device having a plurality of narrow tubes, comprising: end portions of the plurality of narrow tubes is gathered to seal a clearance among the narrow tubes liquid-tightly or air-tightly; and fitting the gathered ends of the narrow tubes into a connecting pipe liquid-tightly or air-tightly.

According to the method of the present invention, after thus fitting the gathered end of the narrow tubes into the connecting pipe, the connecting pipe is contracted in a direction opposite to a direction toward a side in which the narrow tubes are inserted.

More specifically, after thus fitting the gathered end of the narrow tubes into the connecting pipe, the connecting pipe is contracted in a direction opposite to a direction toward a side in which the tubes are inserted by applying a tension in the axial direction of the connecting pipe.

In addition, according to the method of the present invention, the connecting pipe is fitted into a hole formed on a surface of a header.

The aforementioned hole comprises a circular flange so that the connecting pipe fitted therein can be held tightly.

Further, according to the present invention, the end portion of the gathered tubes is thus fitted tightly into the connecting pipe whose internal diameter is larger at the side into which the gathered tubes are inserted. Therefore, a positional accuracy of the tubes fitted into the connecting pipe can be improved. Moreover, since the narrow tubes are used for letting through the first or the second heat medium, a clearance among the tubes can be narrowed. Therefore, a heat exchange portion where heat exchange takes place between the first heat medium and the second heat medium can be downsized.

According to the present invention, moreover, the plurality of connecting pipes is attached to the header. That is, in addition to the above advantages, a larger number of the narrow tubes can be attached to the header. As a result, a total surface area of the tubes for letting through the first heat medium or the second heat medium can be increased so that the heat exchange capacity of the heat exchange device can be enhanced.

As described, the inner diameter of the connecting pipe at one of the end side thereof is larger than that at the other end side, and the gathered narrow tubes are fitted into the connecting pipe from the side of the larger diameter. For this reason, the narrow tubes can be inserted into the connecting pipe easily and tightly

After fitting the plurality of narrow tubes into the connecting pipe from the side of larger diameter, the connecting pipe is contracted with respect to the axial direction thereof. Since the connecting pipe is thus contracted with respect to the axial direction thereof, the plurality of narrow tubes fitted into the connecting pipe can be tightened easily.

More specifically, after fitting the plurality of narrow tubes into the connecting pipe from the side of larger diameter, a tension is applied to the connecting pipe in the axial direction of the connecting pipe to elongate the connecting pipe in the direction opposite to the side in which the tubes are inserted. As a result, in addition to the above-mentioned advantages, the connecting pipe can be contracted homogeneously in the direction perpendicular to the axial direction thereof. Thus, the tension will not be applied to the narrow tubes locally so that the narrow tubes can be prevented from being squeezed.

In addition to the above-mentioned advantages, since the contracted connecting pipe is attached to the header, a larger number of the narrow tubes can be attached to the header. As a result, the heat exchange capacity of the heat exchange device can be enhanced in comparison with the conventional heat exchange devices.

As also described, the hole formed on the surface of the header comprises the circular flange. Therefore, in addition to the above-mentioned advantages, the connecting pipe fitted into the hole can be held tightly from an outer circumference thereof by the circular flange. For this reason, the connecting pipe can be welded easily to be attached to the header.

### BRIEF DESCRIPTION OF THE DRAWINGS

Fig. 1 is a view schematically showing a connecting pipe and tubes according to the present invention.
Fig. 2 is a view showing one example of the heat exchange device according to the present invention.
Fig. 3 is a view showing another example of the heat exchange device according to the present invention.
Fig. 4 is a view showing a connection between the header and the connecting pipe.
Fig. 5 is a view showing one example of attaching a plurality of the heat exchange device to the header.
Fig. 6 is a view showing another example of attaching a plurality of the heat exchange device to the header.
Fig. 7 is a view showing another example of attaching a plurality of the heat exchange device to the header.
Fig. 8 is a view showing another example of attaching a plurality of the heat exchange device to the header.
Fig. 9 is a view showing a step of fitting the tubes into the connection pipe.
Fig. 10 is a view showing a shape of the connection pipe to which the tubes are inserted.

### BEST MODE FOR CARRYING OUT THE INVENTION

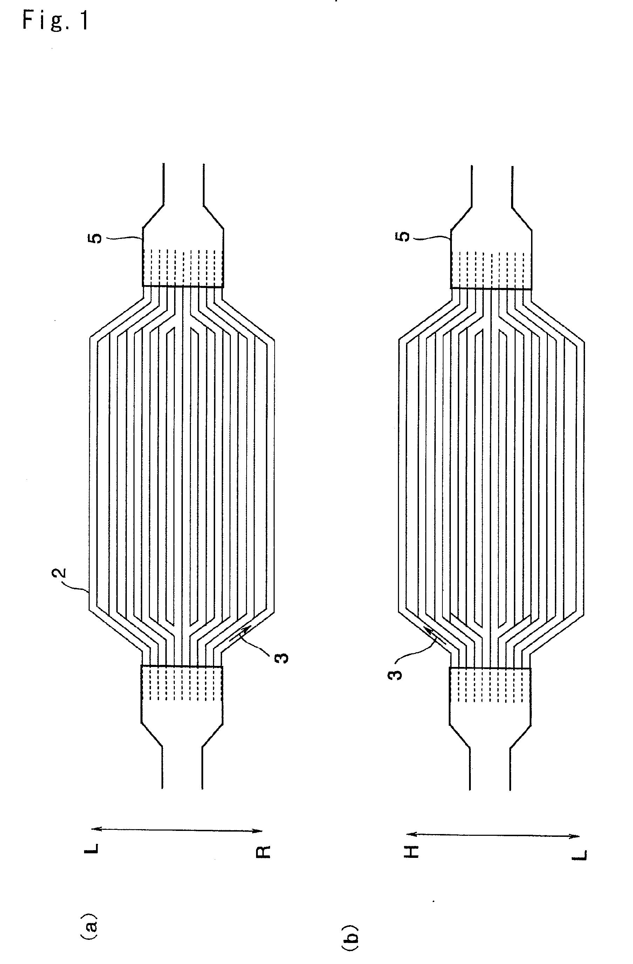

Next, the present invention will be explained with reference to the accompanying drawings. Fig. 1 (a) is a conceptual diagram schematically showing a top view of a heat exchange device 1, and Fig. 1 (b) is a conceptual diagram schematically showing a side view of the heat exchange device 1. As shown in Figs. 1 (a) and 1 (b), the heat exchange device 1 comprises a plurality of narrow tubes 2 made of metal such as aluminum, and the heat exchange device 1 is adapted to exchange the heat between a first heat medium 3 or a second heat medium 4 flowing through the tubes 2 and another heat medium held in the heat exchange device 1. Specifically, the first heat medium 3 is a cooling medium functioning as a thermal input medium, and the second heat medium 4 is brine functioning as a thermal output medium. In the example to be explained hereinafter, the first heat medium 3 is used to flow into the tubes 2.

The tubes 2 are gathered and both ends thereof are aligned. The end portions of the tubes 2 are individually inserted tightly in a connecting pipe 5 to be contacted with each other, and fixed with an inner circumference of the connecting pipe 5 by a brazing method or the like. Thus, the end portions of the tubes 2 are individually held in the connecting pipe 5 liquid tightly and air tightly

As shown in Figs. 1 (a) and 1 (b), a diameter of the connecting pipe 5 is expanded at the side of holding the tubes 2. In other words, a diameter of the connecting pipe 5 is reduced at the side of extension. Therefore, a positional accuracy of the leading ends of the tubes 2 can be improved when fitting the tubes 2 into the connecting pipe 5.

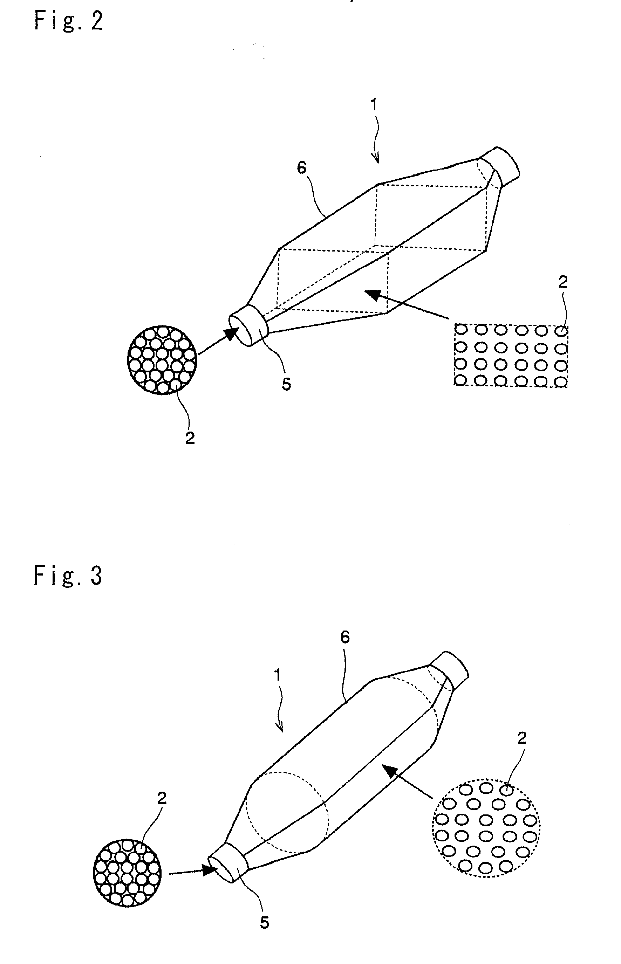

The heat exchange device 1 is depicted in more detail in Figs. 2 and 3. As shown in Figs. 2 and 3, the plurality of narrow pipes 2 are held in a core 6 at certain intervals, and a heat medium other than the first heat medium 3 is also held in the core 6. Alternatively, the core 6 may also be adapted to allow the second heat medium 4 around the heat exchange device 1 flowing into the core 6. Therefore, heat is exchanged between the first heat medium 3 and said other heat medium or the second heat medium 4.

An outer shape of the core 6 should not be limited to a specific shape. Specifically, as shown in Fig. 2, a shape of an intermediate portion of the core 6 may be a rectangular column. In this case, each face of both ends of the core 6 is inclined toward the connecting pipe 5 to reduce the diameter of the core 6 gradually, and a leading end of the core 6 is inserted into the connecting pipe 5. Alternatively, as shown in Fig. 3, a shape of an intermediate portion of the core 6 is a cylinder. In this case, the diameter of the core 6 is reduced gradually toward the connecting pipes 5 at both ends thereof. That is, the end shape of the core 6 is a circular cone to be inserted into the connecting pipe 5.

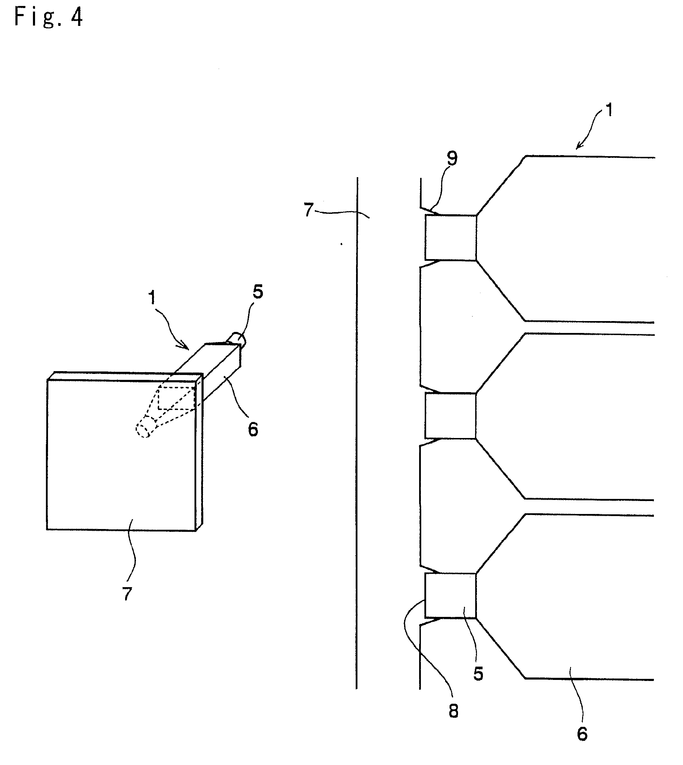

An example of attaching the heat exchange device 1 to a header 7 is shown in Figs. 4 (a) and (b). As described, the tubes 2 are held in the core 6 of the heat exchanger 1, and the leading end of the tubes 2 is inserted into the connecting pipe 5. As shown in Fig. 4 (b), one or more hole(s) 8 is/are formed by pressing or the like. In case the hole 8 is formed by burring, a circular flange 9 is formed around the hole 8. The connecting pipe 5 is inserted into the hole 8 and held by the circular flange 9. Therefore, the connecting pipe 5 can be fitted in the hole 8 certainly As described, brazing alloy is applied to the connection between the tubes 2 and the connecting pipe 5. Therefore, both of the connections between the tubes 2 and the connecting pipe 5 and between the hole 8 and the connecting pipe 5 are fixed by heating the integrated heat exchange device 1 and the header 7 in a furnace. Thus, the heat exchange device 1 and the header 7 can be integrated easily without requiring any specific tool to hold the core 6 in the furnace.

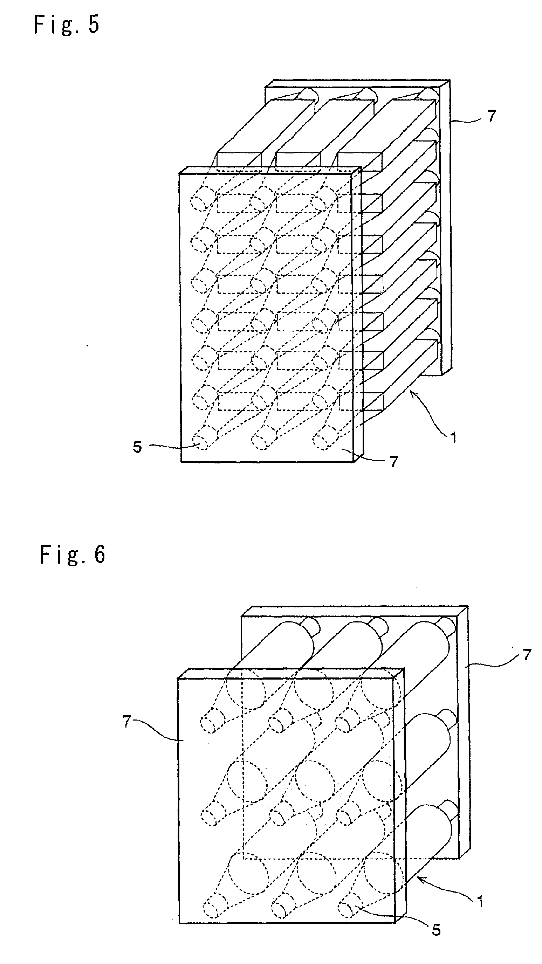

Examples of assembling the plurality of heat exchange devices 1 and the headers 7 are shown in Figs 5 and 6. As described, a plurality of holes 8 is formed on one of the surfaces of the header 7, and the connecting pipes 5 of the heat exchange devices 1 are individually inserted therein. As shown in Figs. 5 and 6, the headers 7 are attached to both of the connecting pipes 5, in other words, the headers 7 are attached to both ends of the heat exchange device 1.

Specifically, the header 7 is a hollow structured plate material, and the connecting pipe 5 and the header 7 are communicated with each other. Therefore, the second heat medium 4 flowing in the hearer 7 is allowed to flow into the tubes 2 via the connecting pipe 5. As explained above, the plurality of heat exchange devices 1 holding the plurality of tubes 2 is attached to the header 7. Therefore, the first heat medium 3 is allowed to flow into large number of the tubes 2.

According to the examples shown in Figs. 5 and 6, the second heat medium 4 intervenes in a space among the heat exchange devices 1. Therefore, the heat is exchanged between the first heat medium 3 flowing through the tubes 2 and the second heat medium 4 existing around the heat exchange device 1 through another heat medium held in the core 6 or through the second heat medium 4 flowing into the core 6. In case the heat is exchanged between the first heat medium 3 and said another heat medium, the heat is transmitted from the first heat medium 3 to said another heat medium, and then, transmitted from said another heat medium to the second heat medium 4. In addition, as described, the shape of the core 6 should not be limited to the specific shape such as cylinder or column.

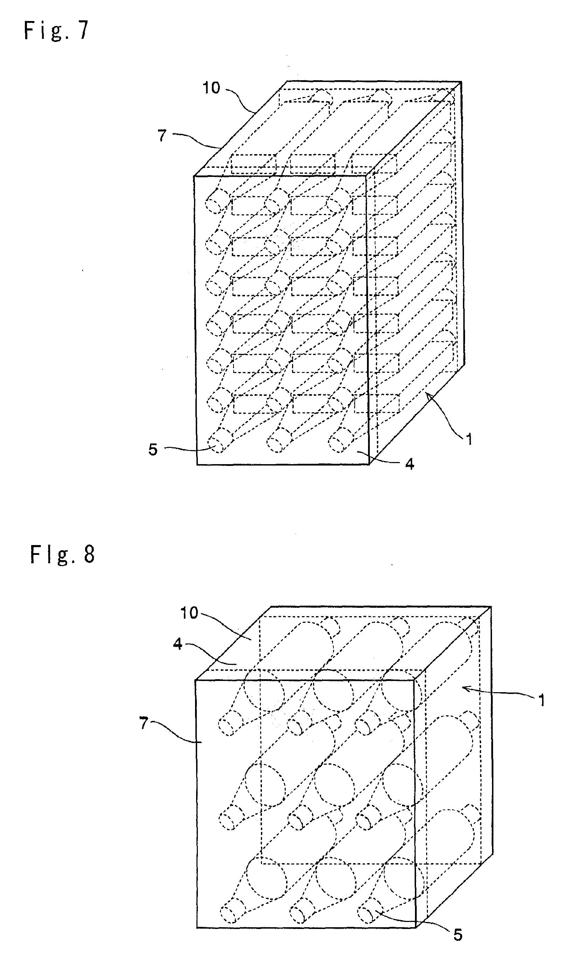

An example of accommodating the heat exchange devices 1 and the headers 7 in a casing 10 is shown in Figs. 7 and 8. In addition, the casing 10 holds the second heat medium 4 therein. As described, the header 7 and the tubes 2 are communicated with each other through the connecting pipe 5. Therefore, the first heat medium 3 or the second heat medium 4 flowing thorough the header 7 is allowed to flow into the tubes 2 via the connecting pipe 5. As also described, both of the connecting pipes 5 of both ends of the heat exchange device 1 are connected individually with the header 7. Therefore, the first heat medium 3 or the second heat medium 4 flowing thorough one of the headers 7 is allowed to flow into the other header 7 through the connecting pipes 5 and the tubes 2.

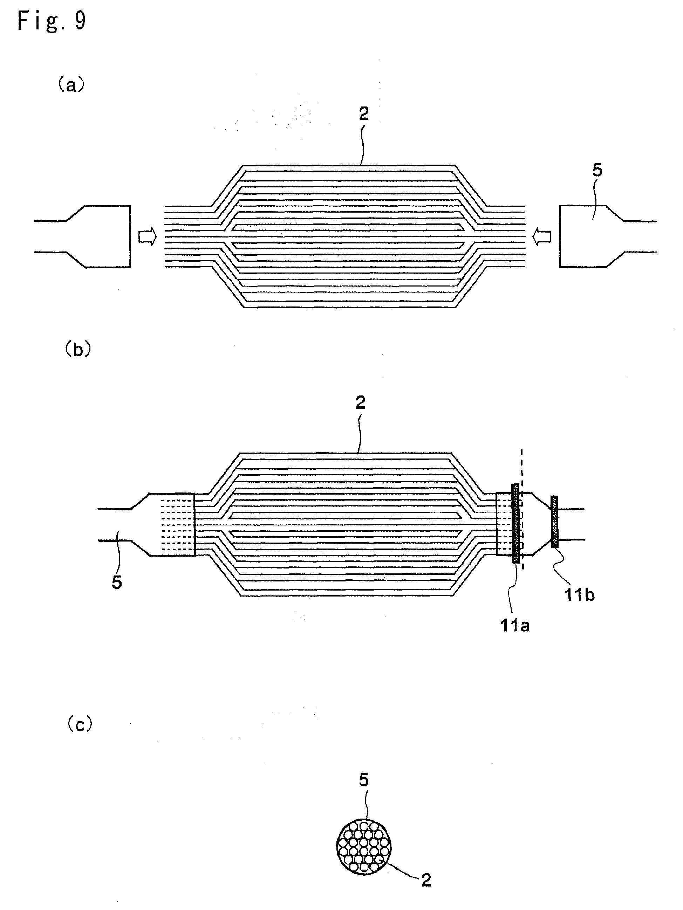

Next, here will be explained a manufacturing method of the heat exchange devices 1 with reference to Figs. 9 (a), (b) and (c). Specifically, Fig. 9 (a) schematically shows a step of inserting the plurality of narrow pipes 2 into the connecting pipe 5. First of all, although not especially shown, the plurality of narrow tubes 2 having a predetermined diameter are formed simultaneously while being aligned parallel to each other. Both ends of the tubes 2 are aligned and gathered. Alternatively, although not especially shown, the tubes 2 may also be formed one by one. In this case, the tubes 2 are placed in a mold to align end portions thereof.

Then, the end portions of the tubes 2 thus aligned and gathered are inserted individually into the connecting pipe 5. In other words, the connecting pipe 5 is fitted on an outer face of each end of the tubes 2. As explained above, the inner diameter of the connecting pipe 5 is larger at the side to which the tubes 2 are inserted, and smaller at the other side to which the tubes 2 are not inserted.

As shown in Fig. 9 (b), after inserting the end portion of the tubes 2 into the connecting pipe 5, a portion of the connecting pipe 5 where end portions of the tubes 2 and the connecting pipe are overlapped is tightened by a tool 11a. Then, a tool 11b is fixedly attached to the other side of the connecting pipe 5, that is, to a portion of the connecting pipe 5 not holding the tubes 2. After that, the tool 11b is moved in a direction toward the end portion of the connecting pipe 5 not holding the tubes 2. As a result, the tapered portion of the connecting pipe 5 is elongated in its axial direction. In this situation, the inner diameter of the connecting pipe 5 is reduced so that the tubes 2 inserted therein are tightened. This procedure of fixing the tubes 2 with the connection pipe 5 is also applied to other end portion of the tubes 2. Thus, a number of fixing tools to be used during the procedure of forming the core 6 can be reduced so that procedure of forming the core 6 can be simplified.

After thus tightening the connecting pipe 5 holding the tubes 2, a brazing alloy is applied to a portion of the tubes 2 in the vicinity of the connecting pipe 5 holding the tubes 2, and the heat exchange device 1 is heated in the furnace. As shown in Fig. 9 (c), a clearance still exists among the tubes 2 even after tightened in the connecting pipe 5. Therefore, the brazing alloy heated in the furnace is allowed to enter into the clearance among the tubes 2. As a result, the tubes 2 are brazed with the connecting pipe 5, and the clearance among the tubes 2 is sealed by the brazing alloy Thus, no specific fixing tools or the like is required during the procedure of brazing the tubes 2 with the connecting pipe 5 so that the brazing procedure can be simplified.

The connecting pipe 5 is then inserted into the hole 8 formed on the surface of the header 7. As described, a plurality of the holes 8 is formed on one of the surfaces of the header 7. Therefore, a plurality of the heat exchange devices can be attached to the header 7. For this reason, the heat exchange device excellent in heat exchange capacity can be manufactured by the method of the present invention.

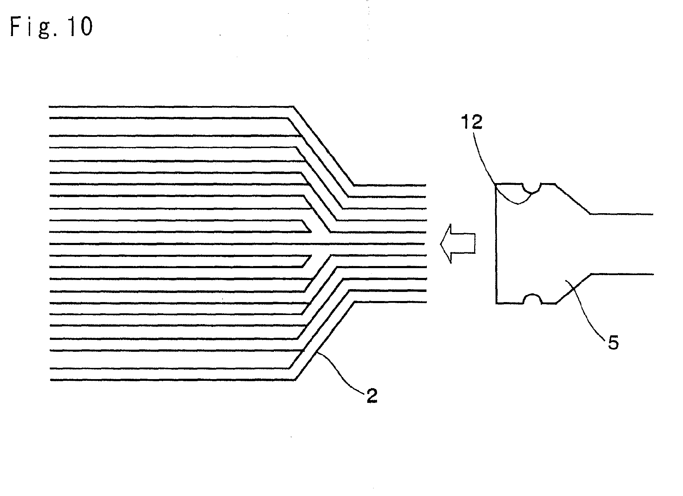

Next, another example of the manufacturing method of the heat exchange device will be explained hereinafter with reference to Fig. 10. As shown in Fig. 10, the connecting pipe 5 to be used in this method comprises a protrusion 12 on its inner surface. Therefore, the end portion of the tubes 2 inserted into the connecting pipe 5 is tightened by the protrusion 12. Here, the forming procedure of the tubes 2 is identical to that in the aforementioned manufacturing method, so further explanation about the forming of the tubes 2 is omitted.

Then, a brazing alloy is applied to a portion of the tubes 2 in the vicinity of the connecting pipe 5 holding the tubes 2, and the heat exchange device 1 is heated in the furnace. As described, a clearance still exists among the tubes 2 even after tightened in the connecting pipe 5. Therefore, the brazing alloy heated in the furnace is allowed to enter into the clearance among the tubes 2. As a result, the tubes 2 are brazed with the connecting pipe 5, and the clearance among the tubes 2 is sealed by the brazing alloy. Thus, according to this manufacturing method, the tool for tightening the connection pipe 5 with the tubes 2 can be reduced. Therefore, the manufacturing method can be simplified.

## Claims

1. A heat exchange device, comprising: a first heat medium and a second heat medium exchanging heat mutually; and a plurality of narrow tubes for letting through one of the heat media; **characterized in that**:
end portions of the plurality of narrow tubes is gathered to seal a clearance among the tubes liquid-tightly or air-tightly; and
the gathered ends of the narrow tubes are fitted into a connecting pipe whose diameter is larger than that of the gathered tubes liquid-tightly or air-tightly

2. The heat exchange device as set forth in claim 1, further comprising:
a hollow header; and
a plurality of holes formed on one of the surfaces of the header;
wherein the connecting pipe is fitted into the hole liquid-tightly or air-tightly.

3. A method for manufacturing a heat exchange device having a plurality of narrow tubes, comprising:
end portions of the plurality of narrow tubes is gathered to seal a clearance among the narrow tubes liquid-tightly or air-tightly; and
fitting the gathered ends of the narrow tubes into a connecting pipe liquid-tightly or air-tightly

4. The method for manufacturing a heat exchange device as set forth in claim 3, comprising:
contracting the connecting pipe in a direction opposite to a direction toward a side in which the narrow tubes are inserted, after fitting the gathered end of the narrow tubes into the connecting pipe.

5. The method for manufacturing a heat exchange device as set forth in claim 3, wherein:
after fitting the gathered end of the narrow tubes into the connecting pipe, the connecting pipe is contracted in a direction opposite to a direction toward a side in which the tubes are inserted by applying a tension in an axial direction of the connecting pipe.

6. The method for manufacturing a heat exchange device as set forth in any of claims 3 to 5, comprising:
fitting the connecting pipe into a hole formed on a surface of a header.

7. The method for manufacturing a heat exchange device as set forth in claim 6, wherein:
the hole comprises a circular flange for holding the connecting pipe fitted therein tightly.
